# EUROPÄISCHE PATENTANMELDUNG

(11) **EP 4 764 279 A1**
(43) Veröffentlichungstag der Anmeldung: **24.06.2026**
(21) Anmeldenummer: 25224033.8
(22) Anmeldetag: 16.12.2025
(51) Int. Cl.: F16L 13/14, F16L 15/00, F16L 15/08, F16J 15/06

(54) **DICHTUNGSELEMENT FÜR EIN FITTING ZUM HERSTELLEN EINER FLUIDDICHTEN SCHRAUBVERBINDUNG FÜR EIN EIN AUSSENGEWINDE AUFWEISENDES ROHR**

(30) Priorität: 20.12.2024 DE 102024139195
(71) Anmelder: Viega Technology GmbH & Co. KG, 57439 Attendorn (DE)
(72) Erfinder: Dasbach, Philipp, 57234 Wilnsdorf (DE); Lindemann, David, 51647 Gummersbach (DE)
(74) Vertreter: Cohausz & Florack

(57) **Zusammenfassung**

Die Erfindung betrifft ein Dichtungselement für ein Fitting zum Herstellen einer fluiddichten Schraubverbindung für ein ein Außengewinde aufweisendes Rohr, mit einem Dichtungskörper (4), mit einem bezogen auf die Anordnung im Fitting distalen Endabschnitt (6), mit einem bezogen auf die Anordnung im Fitting proximalen Endabschnitt (8), mit einem zwischen dem distalen Endabschnitt (6) und dem proximalen Endabschnitt (8) angeordneten Mittelabschnitt (10) und mit einem an der Innenseite (12) zumindest abschnittsweise ausgebildeten, vorzugsweise sich durchgängig über den distalen Endabschnitt (6), den Mittelabschnitt (10) und den proximalen Endabschnitt (8) erstreckenden Innengewinde (14), wobei die Außenkontur (10a) des Mittelabschnitts (10) radial über die Außenkontur (6a) des distalen Endabschnitts (6) und über die Außenkontur (8a) des proximalen Endabschnitts (8) vorsteht und wobei der Dichtungskörper (4) monolithisch ausgebildet ist.

## Beschreibung

Die Erfindung betrifft ein Dichtungselement für ein Fitting zum Herstellen einer fluiddichten Schraubverbindung für ein ein Außengewinde aufweisendes Rohr.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Fittings werden häufig als Pressverbinder ausgebildet, bei dem das Fitting und ein zu verbindendes Rohr mit einer radialen Umformung verbunden werden. Bei bestimmten Anwendungsfällen wie beispielsweise bei Anschlüssen mit vorgegebenen Gewinden sind als Fitting fluiddichte Schraubverbindungen erforderlich, um ein Austreten von Flüssigkeiten oder Gasen aus einem geschlossenen System zu verhindern.

Im Stand der Technik wird dafür ein Verbindungselement vorgeschlagen, dessen Außengewinde mit einer Polyamidschicht überzogen ist. Außengewinde mit PTFE-Dichtung sind in der Sanitär- und Heizungsinstallation weit verbreitet. Diese Verbinder haben einen Bereich mit einem metallischen Außengewinde und einen Bereich in dem ein PTFE-Ring als Gewindedichtung sitzt. Diese Dichtung hat kein Gewinde. Während der Montage schneidet sich das Gegenstück in die PTFE-Dichtung und dichtet so auf dem Innengewinde ab. Weitere übliche Mittel zum Abdichten sind Hanf im Zusammenspiel mit einem Gewindedichtmittel, PTFE-Band oder andere Dichtmittel zum Auftragen.

Derartige thermoplastische Dichtmittel wie Polyamid weisen eine Reihe von Nachteilen auf, insbesondere weisen die bekannten Dichtmittel keine dauerhafte Elastizität auf. Die bekannten Dichtmittel werden also mit der Zeit spröde und verlieren nach und nach ihre Dichtmitteleigenschaften. Höhere Temperaturen oder gar größere Schwankungen der Temperatur, durch die das Dichtmittel abwechselnd aufgeheizt und wieder abgekühlt wird, begünstigen noch das Verspröden des Dichtmittels und damit das Auftreten von Undichtigkeiten.

Neben den nachteiligen Teflonbändern ist auch das Anbringen von Dichtelementen aus einem anderen Kunststoff auf dem Außengewinde oder dem Innengewinde bekannt. Während des Zusammenschraubens der Gewindeelemente bewirkt die Kunststoffdichtung eine Abdichtung des Gewindes.

Bei der Abdichtung der eingangs genannten Gewindepressverbinder treten zudem Nachteile im Verbindungsaufbau auf, die durch Rückfedereigenschaften des Materials der verbundenen Bauteile sowie durch Temperatursprünge nach dem Verpressen hervorgerufen werden. Diese Effekte führen zu einer Spaltbildung innerhalb des Gewinde- und Dichtungssystems, der von der Kunststoffdichtung nicht zuverlässig überbrückt werden kann.

Da die Kunststoffdichtung weder das Auffedern des Fittings noch Bewegungen in der Verbindung kompensieren kann, könnte eine Elastomerdichtung eingesetzt werden. Die Elastomerdichtung kann die Entstehung von Spalten zwar verhindern, jedoch besteht dann die Gefahr von Beschädigungen an den scharfen Gewindekanten. Ein Einsatz von Elastomerdichtungen zur Abdichtung von Gewindeverbindungen ist daher nicht möglich.

Im Stand der Technik wird eine Variante angegeben, bei der mehrere Komponenten für die Abdichtung eines Gewindepressverbinders eingesetzt werden. Da der Dichtkörper mehrere Eigenschaften benötigt, um dauerhaft auf verschiedenen Untergründen dichten zu können, wurden diese Funktionen dabei auf mehrere Bauteile aufgeteilt. Die Abdichtung weist eine Kombination einer PTFE-Gewindedichtung und einem EPDM-O-Ring auf. Die PTFE-Dichtung ermöglich durch gute Gleiteigenschaften ein leichtes Aufschrauben und ist unempfindlich gegen Beschädigungen durch Macken oder scharfe Kanten im Gewinde. Der EPDM-O-Ring diente als Federelement, um einerseits Toleranzschwankungen nach dem Verpressen und andererseits Schwankungen während des Betriebs, wie zum Beispiel Temperaturausdehnung, auszugleichen. Beide Dichtungen liegen innerhalb des Gewindepressverbinders aneinander an und führen zu einer stabilen Abdichtung.

Nachteilig an der beschriebenen Ausführung sind höhere Herstellungskosten und höhere Montagekosten bei der zweiteiligen Ausführung mit einem PTFE-Dichtelement mit Gewinde und einem EPDM-O-Ring als Federelement.

Der vorliegenden Erfindung liegt daher das technische Problem zugrunde, eine Dichtungselement für ein Fitting zum Herstellen einer fluiddichten Schraubverbindung für ein ein Außengewinde aufweisendes Rohr zur Verfügung zu stellen, bei dem die aus dem Stand der Technik bekannten Nachteile nicht oder zumindest weniger deutlich auftreten.

Die zuvor aufgeführte Aufgabe wird erfindungsgemäß durch ein Dichtungselement für ein Fitting zum Herstellen einer fluiddichten Schraubverbindung für ein ein Außengewinde aufweisendes Rohr gelöst mit einem Dichtungskörper mit einem bezogen auf die Anordnung im Fitting distalen Endabschnitt, mit einem bezogen auf die Anordnung im Fitting proximalen Endabschnitt, mit einem zwischen dem distalen Endabschnitt und dem proximalen Endabschnitt angeordneten Mittelabschnitt und mit einem an der Innenseite zumindest abschnittsweise ausgebildeten, vorzugsweise sich durchgängig über den distalen Endabschnitt, den Mittelabschnitt und den proximalen Endabschnitt erstreckenden Innengewinde, wobei die Außenkontur des Mittelabschnitts radial über die Außenkontur des distalen Endabschnitts und über die Außenkontur des proximalen Endabschnitts vorsteht und wobei der Dichtungskörper monolithisch ausgebildet ist.

Das monolithische Dichtelement dient in einem Fitting zum Herstellen einer fluiddichten Schraubverbindung dazu, den Spalt zwischen einem Grundkörper des Fittings und einem Außengewinde eines anzuschließenden Rohres nach dem Verpressen abzudichten.

Zudem gleicht das monolithische Dichtelement durch einen federnden und komprimierten Mittelabschnitt Schwankungen zwischen dem Grundkörper und dem Gewinde aus, die durch Toleranzen, Vibration oder Temperaturausdehnung entstehen können.

Die Funktion des Dichtelements ist in Trinkwasser- und Heizungsleitungsanordnungen langanhaltend, insbesondere für mindestens 50 Jahre gewährleistet. Die Abdichtung ist robust und unempfindlich gegen mögliche Beschädigungen oder scharfe Kanten im Gewinde des anzuschließenden Rohres. Ebenso ist ein Einsatz bei Gasanwendungen möglich.

Der radial nach außen erweiterte, insbesondere wulstförmige Mittelabschnitt ist der Komprimier- und Federbereich, der innerhalb der Grenzen der vorgegebenen Geometrie möglichst viel Material bevorratet, um die Vorspannung des Dichtelements aufrecht zu erhalten. Der Mittelabschnitt liegt radial außerhalb des Dichtbereiches des innen ausgeformten Gewindes.

Der distale Endabschnitt und der proximale Endabschnitt angrenzend an der Mittelabschnitt stehen im Medienkontakt und sind damit direkt einem Alterungsprozess ausgesetzt. Auf der distalen Seite erfolgt die Alterung durch den Kontakt mit der Umgebungsluft und auf der proximalen Innenseite durch das Medium der Rohrleitung, also in der Regel Trink-, Heizwasser oder andere Fluide. Der distale Endabschnitt und der proximale Endabschnitt können auch als "Opferbereich" oder "Alterungsstrecke" angesehen werden, die altern können, bevor das Material im abdichtenden Mittelabschnitt angegriffen wird. Bei Gummiwerkstoffen wird die Alterung in der Regel über das Aushärten beschrieben und definiert.

Durch die Ausführung als monolithisches Dichtelement sinken zudem die Montagekosten im Vergleich zu mehreren Einzelkomponenten.

In bevorzugter Weise weist die Außenkontur des Mittelabschnitts eine nach außen gebogene, vorzugsweise eine abschnittsweise runde Form auf. Durch dies Form kann einerseits viel Material in dem Mittelabschnitt eingebracht werden und andererseits kann durch die Außenkontur das Dichtelement besser an die Innenkontur des Fittings angepasst werden.

Weiterhin kann die Außenkontur des distalen Endabschnitts radial über die Außenkontur des proximalen Endabschnitts vorstehen. Diese Außenkontur hat den Vorteil, dass die entsprechende Innenkontur des Fittings am distalen Ende einen größeren Durchmesser als in innen liegenden Bereichen aufweisen kann, wodurch das Einführen des Gewindeabschnitts in das Fitting erleichtert wird.

Zudem können die Außenkontur des distalen Endabschnitts und/oder die Außenkontur des proximalen Endabschnitts im Wesentlichen zylindrisch ausgebildet sein. Die entsprechenden Abschnitte des Fittings können dann ebenfalls zylindrisch ausgebildet sein, was herstellungstechnische Vorteile hat.

Der Dichtungskörper ist monolithisch ausgebildet und stellt somit ein einstückiges Element dar. Der Dichtkörper kann aber aus einem Material oder aus verschiedenen Materialien zusammengesetzt sein.

Einerseits kann der Dichtungskörper durchgehend aus einem gleichen Material bestehen, wodurch die Herstellung des Dichtkörpers erleichtert ist. Denn bei der Verwendung nur eines Materials können herkömmliche Herstellungsverfahren wie Spritzgießen verwendet werden.

Andererseits kann der Dichtungskörper monolithisch aus mindestens zwei verschiedenen Werkstoffen bestehen. Ein solcher Dichtungskörper kann mittels 2K oder XK-Verfahren hergestellt werden. Mit einem Zwei-Komponenten-Verfahren (2K) oder mit einem Mehr-Komponenten-Verfahren (XK) können die Werkstoffeigenschaften der dabei eingesetzten Materialien miteinander in einem Bauteil kombiniert werden. Gegenüber dem üblichen Spritzgussprozess werden bei diesem Verfahren unterschiedliche Materialien nacheinander in das Spritzgusswerkzeug eingespritzt. Dieses Vorgehen wird auch als 2K-Spritzguss bezeichnet.

Bei einer Anwendung von zwei Materialien für das Dichtelement ist zumindest ein Teil der das Innengewinde bildenden Bereiche innenseitig aus einem Material mit einem ersten Elastizitätsmodul ausgebildet. Der Mittelabschnitt ist zumindest in dem Bereich, in dem die Außenkontur des Mittelabschnitts radial über die Außenkontur des distalen Endabschnitts und über die Außenkontur des proximalen Endabschnitts vorsteht, aus einem Material mit einem zweiten Elastizitätsmodul ausgebildet. Dabei ist das erste Elastizitätsmodul größer als das zweite Elastizitätsmodul.

Somit wird das innen liegende Gewinde aus einem härteren Material gebildet als der außen liegende Bereich des Mittelbschnitts mit einem weicheren Material. Trotz der unterschiedlichen Materialeigenschaften bleibt der Dichtungskörper monolithisch ausgebildet.

Bei einer weiteren Anwendung von drei Materialien ist ein innen liegender Bereich des Mittelabschnitts aus einem ersten Material ausgebildet ist. Ein außen liegender Bereich des Mittelabschnitts ist aus einem zweiten Material ausgebildet und der distale Endabschnitt und der proximale Endabschnitt sind aus einem dritten Material ausgebildet. Das erste Material weist ein größeres Elastizitätsmodul als das zweite Material auf und das dritte Material weist eine größere Beständigkeit gegenüber einem Medienkontakt als das zweite Material auf.

Die Messgröße für die Beständigkeit von Elastomeren ist der Druckverformungsrest, der ein Maß dafür angibt, wie sich Elastomere bei lang andauernder, konstanter Druckverformung und anschließender Entspannung verhalten. Grundsätzlich können Kunststoffe kriechen, was für eine Dichtung ungünstig ist, da so die Flächenpressung abgebaut wird, die auf die Dichtfläche wirkt. Außerdem können Kunststoffe durch oxidative Angriffe altern. Das dritte Material schützt die beiden inneren Materialien vor Sauerstoffeintrag und die Kammerung der Materialien verhindert zudem ein Kriechen.

Der Dichtungskörper kann aus zahlreichen Materialien ausgebildet sein. Bevorzugt besteht der Dichtungskörper zumindest teilweise aus einem der folgenden Materialien besteht: Polytetrafluorethylen (PTFE), Ethylen-Propylen-Dien-Kautschuk (EPDM), Fluorkautschuk (FKM), Hydrierter Acrylnitrilbutadien-Kautschuk (HNBR), Polyethylen hoher Dichte (PE-HD), Chlorbutylkautschuk (CIIR), Polyamide (PA), Polyhydroxybuttersäure (PBH), Polybutadiene (butadiene rubber, PBR) und Polyetheretherketon (PEEK).

Das monolithische Dichtelement wird also bevorzugt aus einem Elastomer gefertigt. Die Fertigung aus einem anderen Kunststoff wie zu Beispiel einem Thermoplast ist ebenfalls denkbar. Das gewählte Material darf dabei keine zu hohe Festigkeit aufweisen und sollte, wenn es über ein E-Modul beschreibbar ist, ein E-Modul kleiner als 5500 MPa, vorzugsweise kleiner als 1500 MPa aufweisen.

Das Material, beziehungsweisen die Materialien, die ausgewählt werden, müssen dabei grundsätzlich in der Lage sein, eine Flächenpressung zu erreichen und mittels federelastischer Eigenschaften aufrecht zu erhalten, die höher ist als der anliegende Systeminnendruck.

Im Folgenden wird die Erfindung anhand von Ausführungsbeispielen mit Bezug auf die Zeichnung erläutert. In der Zeichnung zeigen
- Fig. 1: ein Fitting zum Herstellen einer fluiddichten Schraubverbindung für ein ein Außengewinde aufweisendes Rohr mit einem erfindungsgemäßen Dichtelement,
- Fig. 2: das in Fig. 1 dargestellte Dichtelement in einem teilweisen Querschnitt,
- Fig. 3: das Dichtelement nach den Fig. 1 und 2 in einer isometrischen Ansicht,
- Fig. 4: ein erfindungsgemäßes aus zwei verschiedenen Materialien bestehendes Dichtelement,
- Fig. 5: ein weiteres erfindungsgemäßes aus zwei verschiedenen Materialien bestehendes Dichtelement und
- Fig. 6: ein erfindungsgemäßes aus drei verschiedenen Materialien bestehendes Dichtelement.
- Fig. 7: das Fitting nach Fig. 1 mit eingeschraubtem Rohransatz und mit angesetzter Pressbacke im Querschnitt,
- Fig. 8: das Fitting nach Fig. 7 in einer schematischen Darstellung im Querschnitt vor dem Verpressen und
- Fig. 9: das Fitting nach Fig. 8 nach dem Verpressen.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

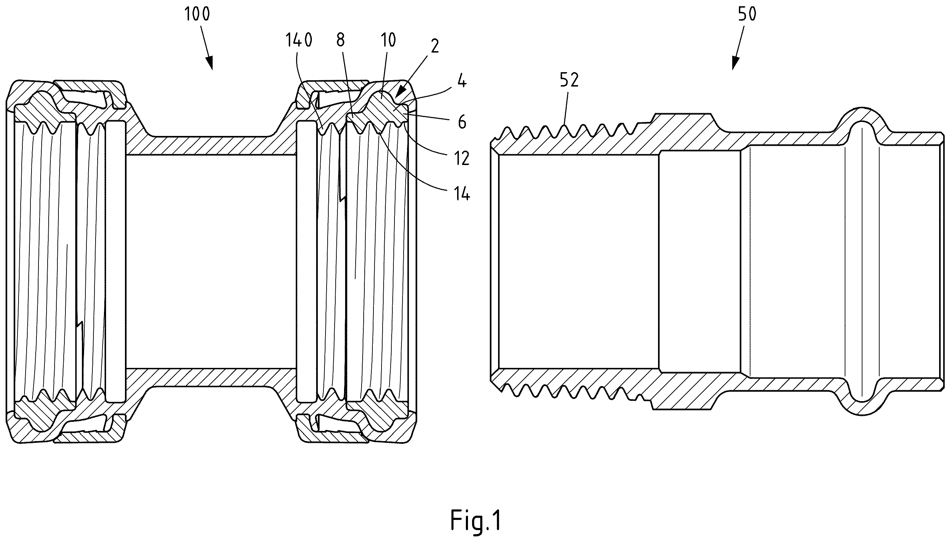

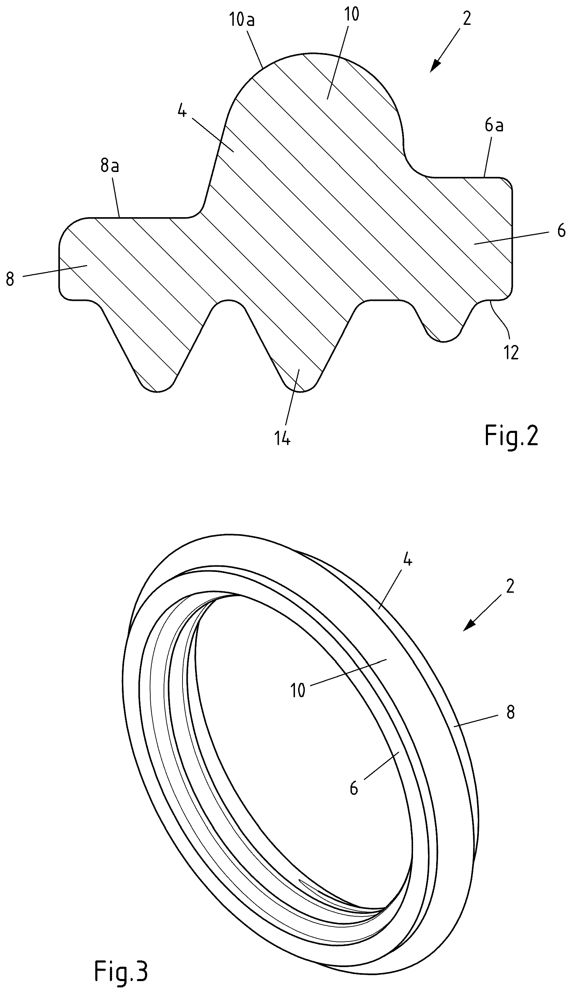

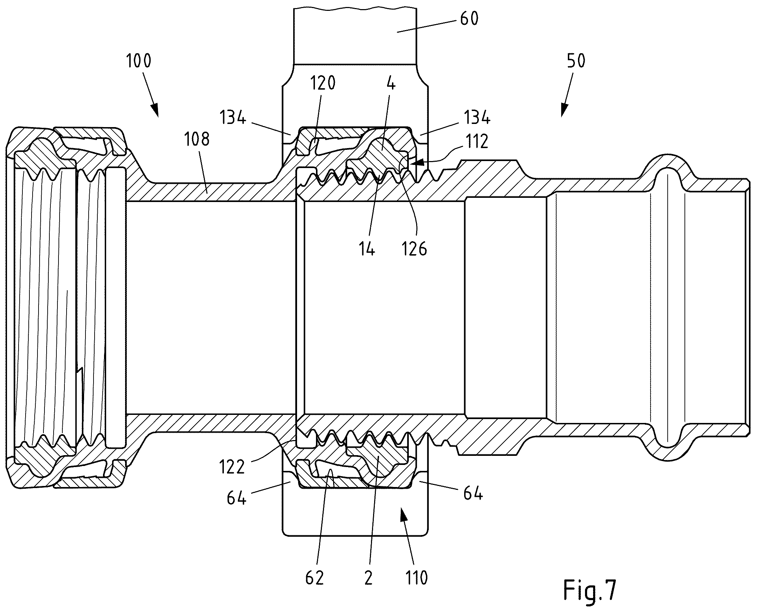

In den Fig. 1 bis 3 wird ein erstes Dichtungselement 2 für ein Fitting 100 zum Herstellen einer fluiddichten Schraubverbindung für ein ein Außengewinde aufweisendes Rohr dargestellt. Das Fitting 100 wird im Zusammenhang mit den weiteren Fig. 7 bis 9 näher erläutert.

Das Dichtungselement 2 weist einen Dichtungskörper 4 mit einem bezogen auf die Anordnung im Fitting 100 distalen Endabschnitt 6, mit einem bezogen auf die Anordnung im Fitting proximalen Endabschnitt 8 und mit einem zwischen dem distalen Endabschnitt 6 und dem proximalen Endabschnitt 8 angeordneten Mittelabschnitt 10 auf.

An der Innenseite 12 des Dichtungskörpers 4 ist Innengewinde 14 ausgebildet, das sich durchgängig über den distalen Endabschnitt 6, den Mittelabschnitt 10 und den proximalen Endabschnitt 8 erstreckt. Die Außenkontur 10a des Mittelabschnitts 10 steht radial über die Außenkontur 6a des distalen Endabschnitts 6 und über die Außenkontur 8a des proximalen Endabschnitts 8 vor. Zudem ist der Dichtungskörper 4 monolithisch ausgebildet.

Der Dichtungskörper 4 ist also geometrisch so ausgeführt, dass das Dichtungselement 2 verschiedene Bereiche hat, die die verschiedenen Aufgaben erfüllen können. So stellt der wulstförmige Mittelabschnitt 10 einen Komprimier- und Federbereich dar, der möglichst viel Material bevorratet, um die Vorspannung des Dichtelements in einer verpressten Verbindung zwischen dem Fitting 100 und einem Rohrabschnitt 50 mit einem eingeschraubten Gewindeabschnitt 52 aufrecht zu erhalten. Dabei liegt der Mittelabschnitt 10 radial außerhalb des Dichtbereiches des ausgeformten Innengewindes 14.

Die Endabschnitte 6 und 8 sind in den Figuren links und rechts des wulstartigen Mittelabschnitts 10 angeordnet und stellen die Bereiche dar, die im verpressten Zustand des Fittings 100 im Medienkontakt stehen und damit direkt dem Alterungsprozess ausgesetzt sind. Auf der distalen Seite erfolgt die Alterung durch die Umgebungsluft und auf der proximalen Seite durch das Medium der Rohrleitung, also in der Regel Trink-, Heizwasser oder andere Fluide.

Die Endabschnitte 6 und 8 können als "Opferbereich" oder "Alterungsstrecke" angesehen werden, die altern können, bevor das Material des Mittelabschnitts 10 im Dichtungsbereich unter dem Mittelabschnitt 10 angegriffen wird.

Wie die Fig. 1 bis 3 weiter zeigen, weist die Außenkontur 10a des Mittelabschnitts 10 eine nach außen gebogene und abschnittsweise runde Form aufweist. Dadurch wird der Wulst ausgebildet.

Weiterhin steht die Außenkontur 6a des distalen Endabschnitts 6 radial über die Außenkontur 8a des proximalen Endabschnitts 8 vor. Dadurch kann das Fitting 100 am distalen Ende eine größere Öffnung aufweisen. Zusätzlich sind die Außenkonturen 6a und 8a des distalen Endabschnitts 6 und des proximalen Endabschnitts 8 im Wesentlichen zylindrisch ausgebildet, wobei herstellungstechnisch bedingte Abweichungen von der zylindrischen Form auftreten können.

Wie dargestellt besteht der Dichtungskörper 4 monolithisch aus einem Werkstoff und ist somit durchgängig homogen ausgebildet. Das im Vergleich zu den Endabschnitten 6 und 8 größere Volumen des Mittelabschnitts1 führt bei gleicher Elastizität zu einer erhöhten Gesamtelastizität und ermöglicht dem Mittelabschnitt 10 eine dauerhafte Dichtfunktion auch bei Schwankungen und/oder Vibrationen den verpressten sicheren Zustand aufrecht zu erhalten.

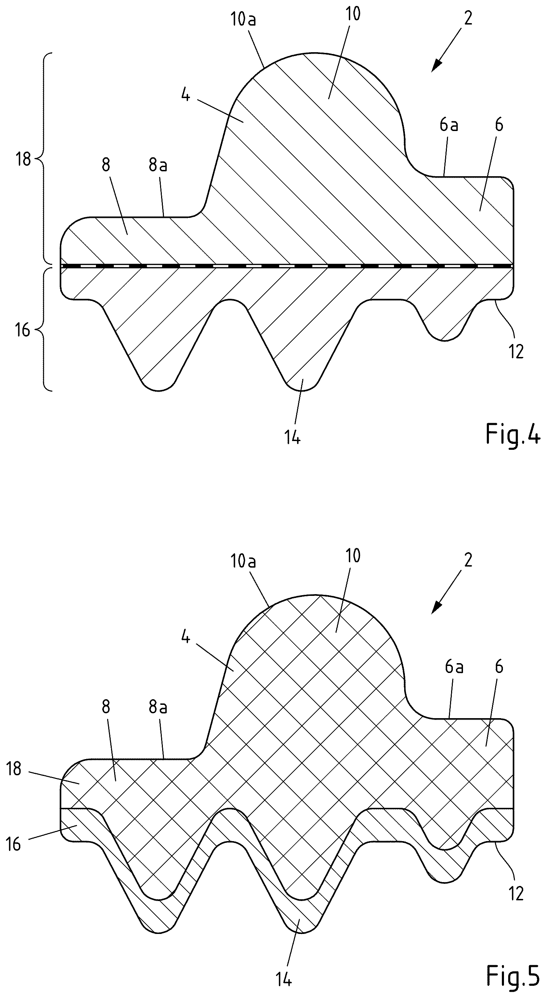

Die weiteren Fig. 4 bis 6 zeigen Ausführungsbeispiele, bei denen der Dichtungskörper 4 monolithisch aus mindestens zwei verschiedenen Werkstoffen besteht.

In Fig. 4 ist ein Dichtungselement 2 gezeigt, bei dem die das Innengewinde 14 bildenden Bereiche der Endabschnitte 6 und 8 und des Mittelabschnitts 10 innenseitig aus einem Material mit einem ersten Elastizitätsmodul ausgebildet sind. Weiterhin ist der Mittelabschnitt 10 aus einem Material mit einem zweiten Elastizitätsmodul ausgebildet ist. Die ausgewählten Materialien ermöglichen es, dass das erste Elastizitätsmodul größer als das zweite Elastizitätsmodul ist. Somit ist der Mittelabschnitt 10 in seiner wulstartigen radialen Erweiterung elastischer als das Innengewinde 14 ausgebildet.

Grundsätzlich würde es dazu ausreichen, wenn der Mittelabschnitt 10 zumindest in dem Bereich, in dem die Außenkontur 10a des Mittelabschnitts 10 radial über die Außenkontur 6a des distalen Endabschnitts 6 und über die Außenkontur 8a des proximalen Endabschnitts 8 vorsteht.

Fig. 4 und 5 zeigen Ausführungsbeispiele, bei denen ein innen liegender Bereich 16 der Endabschnitte 6 und 8 sowie des Mittelabschnitts 10 aus dem ersten Material ausgebildet ist, während der radial nach außen angeordnete Bereich 18 der Endabschnitte 6 und 8 sowie des Mittelabschnitts 10 aus dem zweiten Material ausgebildet ist. Die unterschiedlichen Materialien sind in Fig. 4 und 5 durch unterschiedliche Schraffuren zu erkennen.

Fig. 4 zeigt das Ausführungsbeispiel, bei dem die gestrichelt dargestellte Grenzfläche zwischen dem innen liegenden Bereich 16 und dem außen liegenden Bereich 18 als zylindrische Fläche ausgebildet ist. Fig. 5 zeigt dagegen das Ausführungsbeispiel, bei dem der innen liegende Bereich 16 eine in axialer Richtung gleichbleibende Dicke aufweist und ähnlich wie eine innen angeordnete Beschichtung ausgebildet ist.

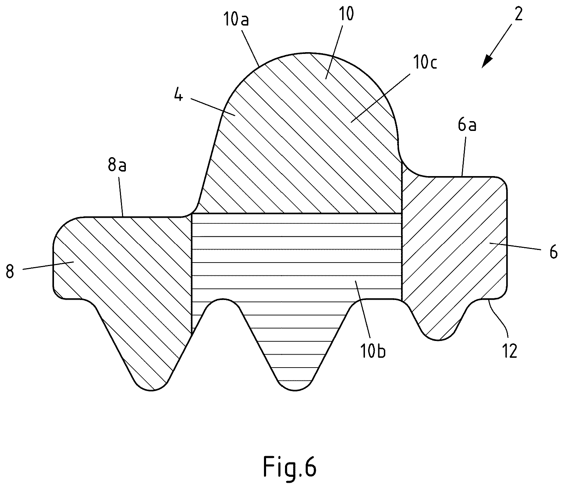

Fig. 6 zeigt ein Ausführungsbeispiel, bei denen ein innen liegender Bereich 10b des Mittelabschnitts 10 aus einem ersten Material ausgebildet ist, bei dem ein außen liegender Bereich 10c des Mittelabschnitts 10 aus einem zweiten Material ausgebildet ist und bei dem der distale Endabschnitt 6 und der proximale Endabschnitt 8 aus einem dritten Material ausgebildet sind. Die unterschiedlichen Materialien sind in Fig. 6 durch unterschiedliche Schraffuren zu erkennen.

Das erste Material weist dabei ein größeres Elastizitätsmodul als das zweite Material auf und das dritte Material weist eine größere Beständigkeit gegenüber einem Medienkontakt als das zweite Material aufweist. Die Messgröße für die Beständigkeit von Elastomeren ist der Druckverformungsrest, der ein Maß dafür angibt, wie sich Elastomere bei lang andauernder, konstanter Druckverformung und anschließender Entspannung verhalten. Grundsätzlich können Kunststoffe kriechen, was für eine Dichtung ungünstig ist, da so die Flächenpressung abgebaut wird, die auf die Dichtfläche wirkt. Außerdem können Kunststoffe durch oxidative Angriffe altern.

Der Dichtungskörper 4 kann zumindest teilweise aus einem der folgenden Materialien bestehen: Polytetrafluorethylen (PTFE), Ethylen-Propylen-Dien-Kautschuk (EPDM), Fluorkautschuk (FKM), Hydrierter Acrylnitrilbutadien-Kautschuk (HNBR), Polyethylen hoher Dichte (PE-HD), Chlorbutylkautschuk (CIIR), Polyamide (PA), Polyhydroxybuttersäure (PBH), Polybutadiene (butadiene rubber, PBR) und Polyetheretherketon (PEEK).

Für einen Teil dieser Materialien werden im Folgenden die Elastizitätsmodule angegeben:

| | |
|---|---|
| PTFE | 200-800 MPa |
| HDPE | 60 - 1350 MPa |
| PA | 1000-3200 MPa |
| PB | 400-700 MPa |
| PE-HD | 650 - 950 MPa |
| PEEK | 3000 - 3700 MPa |
| EPDM ~5MPa | |
| 1 N/mm² = 1 MPa | |

Im Folgenden werden der Aufbau und die Funktionsweise des Fittings 100 anhand der Fig. 1 sowie 7 bis 9 erläutert. Die Figuren zeigen das Fitting 100 zum Herstellen einer fluiddichten Schraubverbindung für ein ein Außengewinde 52 aufweisende Rohr 50 dargestellt. Das Rohr 50 kann Teil eines weiteren Fittings, ein Anschlussstutzen an einem Behälter oder ein Verbindungsrohr zu einer weiteren Armatur sein.

Das Fitting 100 weist einen Fittinggrundkörper 108 und eine mit dem Fittinggrundkörper 108 verbundenen Presshülse 110 auf. Die Presshülse 110 weist eine darin ausgebildete Kammer 112 auf, in der ein Dichtungselement 2 gemäß der Fig. 1 bis 3 angeordnet ist.

Fig. 1 zeigt das Fitting 2 separiert vom Rohrabschnitt 50, während Fig. 7 das Fitting 100 aufgeschraubt auf den Rohrabschnitt 50 darstellt.

Wie aus den Figuren ersichtlich ist, ist am proximalen Ende der Presshülse 110 ein von der Kammer 112 beabstandetes und radial nach außen vorstehendes Führungselement 120 in Form eines separaten und mit der Presshülse 110 verbundenen Teils ausgebildet. Das Führungselement 120 dient im Wesentlichen dazu, dass eine Pressbacke eines Presswerkzeugs leichter und genauer angesetzt werden kann.

Die Außenseite der Presshülse 110 weist am distalen Ende der Kammer 112 einen Durchmesser auf, der dem äußeren Durchmesser des vorstehenden Führungselements 120 entspricht. Insgesamt ergibt sich also eine asymmetrische Kontur der Presshülse 110.

Des Weiteren ist an der Innenseite des proximalen Endes der Presshülse 110 ein Anschlag 122 für das Dichtungselement 2 ausgebildet. Axial in distaler Richtung schließt sich an der Innenseite der Presshülse 110 ein Innengewinde 140 an, das sich möglichst gleichförmig an das Innengewinde 14 des Dichtungselements 2 anschließt. Weiterhin ist am distalen Ende der Presshülse 110 ein Anschlag 126 für das Dichtelement 2 ausgebildet. Dadurch wird das Dichtelement 2 axial gesichert.

Fig. 7 zeigt das Fitting 2 mit eingeschraubtem Rohr 50 im unverpressten Zustand und mit angesetzter Pressbacke 60, die eine im Wesentlichen zylindrische Presskontur 62 aufweist. Lediglich an zwei Positionen der umlaufenden Presskontur 62 sind radial nach innen vorstehende Abschnitte 64 ausgebildet, die mit der Presshülse 110 jeweils außerhalb der Kammer 112 und des Führungselements 120 angreifen. Die auch als Führungsnocken bezeichneten vorstehenden Abschnitte 64 führen zu einer geringeren Presskraft als ein umlaufender Führungssteg, der auch während des Umformens das Fitting 2 führen würde.

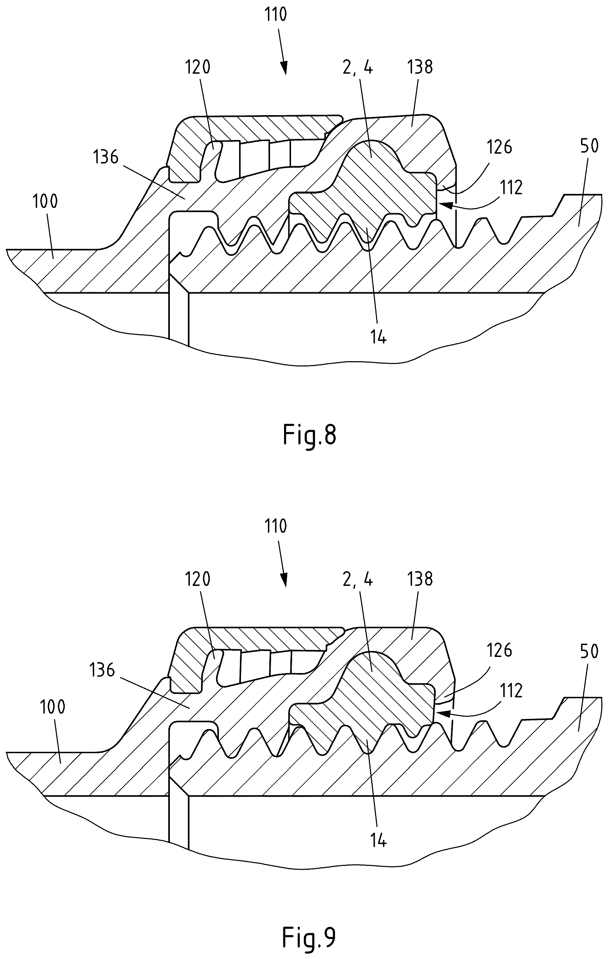

Die Fig. 8 und 9 zeigen das Fitting 2 vor und nach dem Verpressen anhand einer schematischen Darstellung.

Die zylindrische Presskontur 62 verformt die Presshülse 110 beim radial einwärtigen Pressvorgang, also das distale Ende der Kammer 112 sowie das Führungselement 120, wodurch es vor allem zu einem Verbiegen der Presshülse 110 im Bereich der beiden Abschnitte 136 und 138 kommt. Dieses Verbiegen wird im Rahmen dieser Beschreibung auch als Umklappen bezeichnet. Somit weist die Presshülse 110 eine einseitig umklappende Geometrie auf. Zudem verbiegt sich das Führungselement 120 nach innen.

Durch das Umklappen der Presshülse 110 wird einerseits durch die radial nach innen umgeformte Kammer 112 das Dichtelement 2 fest auf das Rohr 50 und den Gewindeabschnitt 52 gepresst. Dadurch entsteht ein mehrere Gewindegänge der Gewindeabschnitte 14 und 52 langer Abschnitt, entlang dessen das Dichtelement 2 abdichtend mit dem Rohr 50 verbunden ist.

Presskräfte und Umformgrad können durch die einseitig umklappende Geometrie der Presshülse 110 gezielt eingestellt werden. Durch die Reduktion der Größe des umzuformenden Bereiches der Presshülse 110 werden die Presskräfte reduziert und Wandstärken können dennoch aufrechterhalten werden.

Das Fitting 100 besteht beispielsweise aus Siliziumbronze, kann aber aus jedem anderen Metall oder Legierung hergestellt sein. Das Fitting 100 wird auf ein Außengewinde nach DIN EN 10226 oder ISO 228 geschraubt und anschließend verpresst.

## Patentansprüche

1. Dichtungselement für ein Fitting zum Herstellen einer fluiddichten Schraubverbindung für ein ein Außengewinde aufweisendes Rohr,
- mit einem Dichtungskörper (4),
- mit einem bezogen auf die Anordnung im Fitting distalen Endabschnitt (6),
- mit einem bezogen auf die Anordnung im Fitting proximalen Endabschnitt (8),
- mit einem zwischen dem distalen Endabschnitt (6) und dem proximalen Endabschnitt (8) angeordneten Mittelabschnitt (10) und
- mit einem an der Innenseite (12) zumindest abschnittsweise ausgebildeten, vorzugsweise sich durchgängig über den distalen Endabschnitt (6), den Mittelabschnitt (10) und den proximalen Endabschnitt (8) erstreckenden Innengewinde (14),
- wobei die Außenkontur (10a) des Mittelabschnitts (10) radial über die Außenkontur (6a) des distalen Endabschnitts (6) und über die Außenkontur (8a) des proximalen Endabschnitts (8) vorsteht und
- wobei der Dichtungskörper (4) monolithisch ausgebildet ist.

2. Dichtungselemente nach Anspruch 1,
**dadurch gekennzeichnet,**
**dass** die Außenkontur (10a) des Mittelabschnitts (10) eine nach außen gebogene, vorzugsweise eine abschnittsweise runde Form aufweist.

3. Dichtungselemente nach Anspruch 1 oder 2,
**dadurch gekennzeichnet,**
**dass** die Außenkontur (6a) des distalen Endabschnitts (6) radial über die Außenkontur (8a) des proximalen Endabschnitts (8) vorsteht.

4. Dichtungselemente nach einem der Ansprüche 1 bis 3,
**dadurch gekennzeichnet,**
**dass** die Außenkontur (6a) des distalen Endabschnitts (6) und/oder die Außenkontur (8a) des proximalen Endabschnitts (8) im Wesentlichen zylindrisch ausgebildet sind.

5. Dichtungselemente nach einem der Ansprüche 1 bis 4,
**dadurch gekennzeichnet,**
**dass** der Dichtungskörper (4) monolithisch aus mindestens zwei verschiedenen Werkstoffen besteht.

6. Dichtungselemente nach Anspruch 5,
**dadurch gekennzeichnet,**
- **dass** zumindest ein Teil der das Innengewinde bildenden Bereiche (16) innenseitig aus einem Material mit einem ersten Elastizitätsmodul ausgebildet ist,
- **dass** der Mittelabschnitt (10) zumindest in dem Bereich, in dem die Außenkontur (10a) des Mittelabschnitts (10) radial über die Außenkontur (6a) des distalen Endabschnitts (6) und über die Außenkontur (8a) des proximalen Endabschnitts (8) vorsteht, aus einem Material mit einem zweiten Elastizitätsmodul ausgebildet ist und
- **dass** das erste Elastizitätsmodul größer als das zweite Elastizitätsmodul ist.

7. Dichtungselemente nach Anspruch 5,
**dadurch gekennzeichnet,**
- **dass** ein innen liegender Bereich (10b) des Mittelabschnitts (10) aus einem ersten Material ausgebildet ist,
- **dass** ein außen liegender Bereich (10c) des Mittelabschnitts (10) aus einem zweiten Material ausgebildet ist,
- **dass** der distale Endabschnitt (6) und der proximale Endabschnitt (8) aus einem dritten Material ausgebildet sind,
- **dass** das erste Material ein größeres Elastizitätsmodul als das zweite Material aufweist und
- **dass** das dritte Material eine größere Beständigkeit gegenüber einem Medienkontakt als das zweite Material aufweist.

8. Dichtungselemente nach einem der Ansprüche 1 bis 7,
**dadurch gekennzeichnet,**
**dass** der Dichtungskörper (4) zumindest teilweise aus einem der folgenden Materialien besteht: Polytetrafluorethylen (PTFE), Ethylen-Propylen-Dien-Kautschuk (EPDM), Fluorkautschuk (FKM), Hydrierter Acrylnitrilbutadien-Kautschuk (HNBR), Polyethylen hoher Dichte (PE-HD), Chlorbutylkautschuk (CIIR), Polyamide (PA), Polyhydroxybuttersäure (PBH), Polybutadiene (butadiene rubber, PBR) und Polyetheretherketon (PEEK).
